# EUROPEAN PATENT APPLICATION

(11) **EP 4 636 920 A1**
(43) Date of publication of application: **22.10.2025**
(21) Application number: 24762936.3
(22) Date of filing: 29.01.2024
(51) Int. Cl.: H01M 50/258

(54) **ENERGY STORAGE BATTERY PACK**

(30) Priority: 28.02.2023 CN 202320358102 U; 28.02.2023 CN 202320363371 U
(71) Applicant: Zhuhai Cosmx Power Supply Co., Ltd., Guangdong 519100 (CN)
(72) Inventor: YI, Guogao, Zhuhai, Guangdong 519100 (CN); HUANG, Zhaoqi, Zhuhai, Guangdong 519100 (CN); WU, Jiafan, Zhuhai, Guangdong 519100 (CN); LI, Laocong, Zhuhai, Guangdong 519100 (CN); MA, An, Zhuhai, Guangdong 519100 (CN)
(74) Representative: Murgitroyd & Company
(86) International application number: PCT/CN2024/074556
(87) International publication number: WO 2024/179253

(57) **Abstract**

The present application provides an energy storage battery pack, which includes a battery module, a battery management unit, an upper housing unit, and a lower housing. The upper housing unit includes an upper housing body and a terminal, the terminal is embedded in the upper housing body, and is integrally formed with the upper housing body; an opening of the upper housing body is opposite to an opening of the lower housing, the upper housing unit is fixedly connected to the lower housing, the lower housing is provided with an accommodation cavity, and the battery module and the battery management unit are connected and arranged in the accommodation cavity; and a first end of the terminal extends into the accommodation cavity and is connected to the battery management unit, and a second end of the terminal is configured to be connected to an external device. Through such a structural design, a connection mode between the terminal and a housing is changed, a connection process is simplified, and thus the production and assembly efficiency of the energy storage battery pack is improved.

## Description

The present application claims priority to Chinese Patent Application No. 2023203581025, entitled "ENERGY STORAGE BATTERY PACK", and Chinese Patent Application No. 2023203633710, entitled "Battery", filed with the China National Intellectual Property Administration on February 28, 2023. The contents of these applications are hereby incorporated by reference in their entireties.

### TECHNICAL FIELD

The present application relates to the technical field of storage batteries, and in particular, to an energy storage battery pack.

### BACKGROUND

With the rapid development of new energy power generation, especially wind power generation, photovoltaic power generation, and the like, higher requirements have been placed on a power energy storage system. A common power energy storage system adopts chemical energy storage, and a battery energy storage system is the most widely used.

A battery module and a housing in the battery energy storage system are grouped and packaged to form an energy storage battery pack, a terminal is located inside the housing and is connected to the battery module and an external device, and the connection between the terminal and the housing is realized by welding or potting.

However, a production efficiency of the energy storage battery pack is reduced due to such a complicated connection process.

### SUMMARY

Embodiments of the present utility model provides an energy storage battery pack, which may simplify a connection process and improve production efficiency of the energy storage battery pack.

To achieve the foregoing objective, the present application uses the following technical solutions:
The present application provides an energy storage battery pack, which includes a battery module, a battery management unit, an upper housing unit and a lower housing. The upper housing unit includes an upper housing body and a terminal, the terminal is embedded in the upper housing body, and is integrally formed with the upper housing body. An opening of the upper housing body is opposite to an opening of the lower housing, the upper housing unit is fixedly connected to the lower housing, the lower housing is provided with an accommodation cavity, and the battery module and the battery management unit are connected and arranged in the accommodation cavity.

A first end of the terminal extends into the accommodation cavity and is connected to the battery management unit, and a second end of the terminal is configured to be connected to an external device.

As a possible implementation, the terminal is a rotary member, a circumferential outer sidewall of the terminal is connected to the upper housing body, the terminal includes a terminal body and at least two bosses, the at least two bosses are distributed at intervals along an axial direction of the terminal, and the boss extends outwards along a radial direction of the terminal.

A length of the boss extending away from the terminal along the radial direction of the terminal is 1 to 2 mm.

As a possible implementation, a plurality of anti-rotation ribs are uniformly distributed on a circumferential outer sidewall of the boss along a circumferential direction of the terminal.

As a possible implementation, the terminal includes a first connection hole and a second connection hole which are coaxially arranged, the first connection hole and the second connection hole are oppositely arranged, an opening of the first connection hole faces the first end of the terminal, an opening of the second connection hole faces the second end of the terminal, the first connection hole is connected to the battery management unit, the second connection hole is connected to the external device, a partition layer is formed between a bottom of the first connection hole and a bottom of the second connection hole, and a thickness of the partition layer in an axial direction of the terminal is greater than or equal to 1 mm.

As a possible implementation, the first connection hole and the second connection hole are threaded holes, the first connection hole is in threaded connection with the battery management unit, and the second connection hole is configured to be in threaded connection with the external device.

As a possible implementation, the battery module includes a battery cell and a support member, the battery cell includes a plurality of battery cell units, and the plurality of battery cell units are sequentially stacked and electrically connected along a width extending direction of the lower housing to form a positive tab and a negative tab of the battery cell.

The support member covers the battery cell, the support member includes a tab connection portion, the positive tab and the negative tab are respectively welded to the tab connection portion to form a positive tab connection portion and a negative tab connection portion, and the negative tab connection portion and the positive tab connection portion are respectively bolted to the first connection holes of different terminals.

As a possible implementation, the battery management unit includes at least one circuit board, the circuit board is connected to the support member along a height extending direction of the lower housing, and the circuit board is electrically connected to the support member and the terminal, respectively.

As a possible implementation, the circuit board includes a first circuit board and a second circuit board, the first circuit board is electrically connected to the second circuit board, and the first circuit board is electrically connected to the positive tab connection portion and the first connection hole, respectively.

As a possible implementation, the battery module further includes a foam, where the foam is connected to two opposite sides of the battery cell unit; and/or, the foam is connected to a bottom of the battery cell unit.

As a possible implementation, a reinforcement portion is disposed on an outer wall of at least one of two side surfaces, distributed along the width extending direction of the lower housing, of the lower housing, the reinforcement portion includes a plurality of first reinforcement ribs and a plurality of second reinforcement ribs, and a first reinforcement rib of the plurality of first reinforcement ribs is perpendicular to a second reinforcement rib of the plurality of second reinforcement ribs.

As a possible implementation, a plurality of bolt connection portions are disposed on outer walls of two side surfaces, distributed along a length direction of the lower housing, of the lower housing, and a bolt connection portion of the plurality of bolt connection portions is configured to be fixedly connected to an external component.

As a possible implementation, the terminal is a conductive body, and the upper housing body is an injection molded member and is injection molded with the terminal.

As a possible implementation, the terminal further includes an insulating sleeve, and the insulating sleeve is sleeved on the second connection hole.

As a possible implementation, the energy storage battery pack further includes an explosion-proof assembly, where the upper housing body is provided with a through hole in communication with the accommodation cavity.

The explosion-proof assembly includes a breathable membrane and a piercing member, the breathable membrane is attached to an inner wall surface of the upper housing body and covers the through hole, the piercing member and the upper housing body are integrally formed, the piercing member is located in the through hole, a gap is provided between the piercing member and an end surface of the through hole, and the piercing member is configured to pierce the breathable membrane when the breathable membrane deforms and expands beyond the end surface of the through hole.

As a possible implementation, the through hole penetrates through a sidewall of the upper housing body.

It may be understood that a design of the through hole enables small molecules to be discharged outside the energy storage battery pack, so that an expansion of the energy storage battery pack is avoided, and a service life of the energy storage battery pack is prolonged.

As a possible implementation, the piercing member includes a cone, and a tip of the cone faces the breathable membrane.

It may be understood that such a design facilitates the piercing member to pierce the breathable membrane faster for pressure relief.

As a possible implementation, a gap distance between the tip of the cone and the end surface of the through hole is between 0.3 mm and 0.4 mm.

It may be understood that an appropriate gap distance is convenient to provide a space for a deformation of the breathable membrane, thereby improving a pressure relief effect.

As a possible implementation, the explosion-proof assembly further includes a supporting spoke, the supporting spoke is located in the through hole, a first end of the supporting spoke is connected to an inner wall surface of the through hole, and a second end of the supporting spoke is connected to the piercing member.

It may be understood that the supporting spoke is designed to support the piercing member to improve an overall strength.

As a possible implementation, there are a plurality of supporting spokes, and the plurality of supporting spokes are distributed at different positions in a circumferential direction of the through hole.

It may be understood that the plurality of supporting spokes are designed to better support the piercing member and improve an overall strength.

As a possible implementation, the supporting spoke and the piercing member are integrally formed.

It should be noted that, the supporting spoke and the piercing member are integrally formed, so that not only can a connection strength between the supporting spoke and the piercing member be improved, but also a seamless connection between the supporting spoke and the piercing member can be realized, thereby reducing a risk of cracking at a connecting position between the supporting spoke and the piercing member.

As a possible implementation, a positioning portion is further provided on the inner wall surface of the upper housing body, and the positioning portion abuts against an edge of the breathable membrane to position the breathable membrane.

It may be understood that a design of the positioning portion facilitates positioning of the breathable membrane, improves an accuracy of an arrangement position of the breathable membrane, and increases interaction between the breathable membrane and the piercing member.

As a possible implementation, the positioning portion is provided with a first positioning flange and a second positioning flange, and the first positioning flange and the second positioning flange abut against edges in different directions of the breathable membrane, respectively.

It may be understood that a design of the first positioning flange and the second positioning flange further improves the accuracy of positioning.

As a possible implementation, the energy storage battery pack further includes a circuit board, where a tab of a battery cell in the battery module is electrically connected to the circuit board, and the circuit board faces the upper housing body.

The upper housing body and the lower housing jointly enclose the accommodation cavity, and the through hole and the breathable membrane are both located on the upper housing body.

It may be understood that such a design improves compactness of an entire structure.

The present application provides an energy storage battery pack, which includes a battery module, a battery management unit, an upper housing unit, and a lower housing. The upper housing unit includes an upper housing body and a terminal, the terminal is embedded in the upper housing body, and is integrally formed with the upper housing body; an opening of the upper housing body is opposite to an opening of the lower housing, the upper housing unit is fixedly connected to the lower housing, the lower housing is provided with an accommodation cavity, and the battery module and the battery management unit are connected and arranged in the accommodation cavity; and a first end of the terminal extends into the accommodation cavity and is connected to the battery management unit, and a second end of the terminal is configured to be connected to an external device. Through such a structural design, a connection mode between the terminal and a housing is changed, the connection process is simplified, and thus the production and assembly efficiency of the energy storage battery pack is improved.

### BRIEF DESCRIPTION OF THE DRAWINGS

In order to more clearly illustrate the embodiments of the present utility model or the technical solutions in the prior art, the accompanying drawings required in the description of the embodiments or the prior art are briefly described below. Obviously, the drawings in the following description are some embodiments of the present utility model, and for those of ordinary skill in the art, other drawings may be obtained according to these drawings without creative efforts.
FIG. 1 is a structural exploded view of an energy storage battery pack according to an embodiment of the present application.
FIG. 2 is a schematic structural diagram of a terminal in an energy storage battery pack according to an embodiment of the present application.
FIG. 3 is a structural sectional view of a terminal in an energy storage battery pack according to an embodiment of the present application.
FIG. 4 is a schematic structural diagram of a battery module in an energy storage battery pack according to an embodiment of the present application.
FIG. 5 is a schematic structural diagram of a support member in an energy storage battery pack according to an embodiment of the present application.
FIG. 6 is a bottom view of a support member in an energy storage battery pack according to an embodiment of the present application.
FIG. 7 is a schematic structural diagram of a battery management unit in an energy storage battery pack according to an embodiment of the present application.
FIG. 8 is a structural exploded view of a battery management unit in an energy storage battery pack according to an embodiment of the present application.
FIG. 9 is a left view of a battery management unit in an energy storage battery pack according to an embodiment of the present application.
FIG. 10 is an assembly sectional view of an energy storage battery pack according to an embodiment of the present application.
FIG. 11 is a schematic structural diagram of an upper housing unit in an energy storage battery pack according to an embodiment of the present application.
FIG. 12 is a structural sectional view of an upper housing unit in an energy storage battery pack according to an embodiment of the present application.
FIG. 13 is a schematic structural diagram of an upper housing body, from a first perspective, in an energy storage battery pack according to an embodiment of the present application.
FIG. 14 is a schematic structural diagram of an upper housing body, from a second perspective, in an energy storage battery pack according to an embodiment of the present application.
FIG. 15 is a schematic diagram of a sectional structure along the line A-A in FIG. 14 according to an embodiment of the present application.
FIG. 16 is an enlarged schematic diagram of area I in FIG. 15.
FIG. 17 is an exploded view of a breathable membrane and an upper housing body in an energy storage battery pack according to an embodiment of the present application.
FIG. 18 is an assembly diagram of a breathable membrane and an upper housing body in an energy storage battery pack according to an embodiment of the present application.
FIG. 19 is a schematic structural diagram of a part of an upper housing body in an energy storage battery pack according to an embodiment of the present application.
FIG. 20 is a schematic diagram of a sectional structure along the line B-B in FIG. 14 according to an embodiment of the present application.
FIG. 21 is a schematic diagram of a sectional structure after a breathable membrane is installed along the line B-B in FIG. 14 according to an embodiment of the present application.

Description of reference numbers:
100-energy storage battery pack; 110-battery module; 120-upper housing unit; 130-lower housing; 140-positioning portion; 150-explosion-proof assembly;
111-battery cell; 112-support member; 113-battery management unit; 114-foam; 115-through hole; 121-upper housing body; 122-terminal; 131-reinforcement portion; 132-bolt connection portion;
1111-battery cell unit; 1121-tab connection portion; 1131-circuit board; 1132-first circuit board; 1133-second circuit board; 1134-copper busbar; 1135-pin header; 1221-terminal body; 1222-boss; 1223-anti-rotation rib; 1224-first connection hole; 1225-second connection hole; 1226-partition layer; 1227-bolt; 1228-rubber plug; 1229-bolt connection hole; 1230-insulating sleeve; 13 11-first reinforcement rib; 1312-second reinforcement rib;
141-first positioning flange; 142-second positioning flange;
151-breathable membrane; 152-piercing member; and 153-supporting spoke.

### DETAILED DESCRIPTION OF THE EMBODIMENTS

In order to make the objectives, technical solutions, and advantages of the embodiments of the present utility model clearer, the technical solutions in the embodiments of the present utility model are clearly and completely described below with reference to the accompanying drawings in the embodiments of the present utility model. Obviously, the described embodiments are a part, rather than all of the embodiments of the present utility model. All other embodiments obtained by a person of ordinary skill in the art based on the embodiments of the present utility model without creative efforts shall fall within the protection scope of the present utility model. In the case of no conflict, the following embodiments and features in the embodiments may be combined with each other.

In the description of the present utility model, it should be understood that the orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the accompanying drawings. The terms are used merely for the convenience of describing the present utility model and simplifying the description, rather than indicating or implying that the referenced device or element must have a specific orientation or be constructed and operated in a specific orientation, and therefore the terms cannot be understood as limitations to the present utility model.

In the present utility model, unless otherwise expressly specified and limited, terms such as "installation", "linkage", "connection" and "fixation" should be broadly construed. For example, "connection" may refer to a fixed connection, a detachable connection, or an integral formation; and "linkage" may refer to a direct connection, or an indirect connection via an intermediary, or a communication between inner cavities of two elements or an interaction relationship between the two elements. For those of ordinary skill in the art, the specific meanings of the above terms in the present utility model may be understood according to specific situations.

It should be noted that, in the description of the present utility model, the terms "first", "second" and "third" are only used to facilitate describing different cavities, and cannot be understood as indicating or implying a sequential relationship, a relative importance, or implicitly indicating the number of indicated technical features. Therefore, a feature defined with "first", "second" or "third" may explicitly or implicitly include at least one such feature.

In the prior art, with the rapid development of new energy power generation, especially wind power generation, photovoltaic power generation, and the like, higher requirements have been placed on a power energy storage system. A common power energy storage system adopts chemical energy storage, and a battery energy storage system is the most widely used. A battery module and a housing in the battery energy storage system are grouped and packaged to form an energy storage battery pack, a terminal is located inside the housing and is connected to the battery module and an external device, and the connection between the terminal and the housing is realized by welding or potting. However, a production efficiency of the energy storage battery pack is reduced due to such a complicated connection process.

In order to overcome the defects in the prior art, the present application provides an energy storage battery pack, which includes a battery module, a battery management unit, an upper housing unit, and a lower housing. The upper housing unit includes an upper housing body and a terminal, the terminal is embedded in the upper housing body, and is integrally formed with the upper housing body. An opening of the upper housing body is opposite to an opening of the lower housing, the upper housing unit is fixedly connected to the lower housing, the lower housing is provided with an accommodation cavity, and the battery module and the battery management unit are connected and arranged in the accommodation cavity. A first end of the terminal extends into the accommodation cavity and is connected to the battery management unit, and a second end of the terminal is configured to be connected to an external device. Through a structural design like this, a connection mode between the terminal and a housing is changed, the connection process is simplified, and thus the production and assembly efficiency of the energy storage battery pack is improved.

The contents of the present utility model are described in detail below with reference to the accompanying drawings, so that those skilled in the art can have a clearer and more detailed understanding of the contents of the present utility model.

The present application provides an energy storage battery pack 100, which includes a battery module 110, a battery management unit 113, an upper housing unit 120, and a lower housing 130. The upper housing unit 120 includes an upper housing body 121 and a terminal 122, the terminal 122 is embedded in the upper housing body 121, and is integrally formed with the upper housing body 121; an opening of the upper housing body 121 is opposite to an opening of the lower housing 130, the upper housing unit 120 is fixedly connected to the lower housing 130, the lower housing 130 is provided with an accommodation cavity, and the battery module 110 and the battery management unit 113 are connected and arranged in the accommodation cavity; and a first end of the terminal 122 extends into the accommodation cavity and is connected to the battery management unit 113, and a second end of the terminal 122 is configured to be connected to an external device.

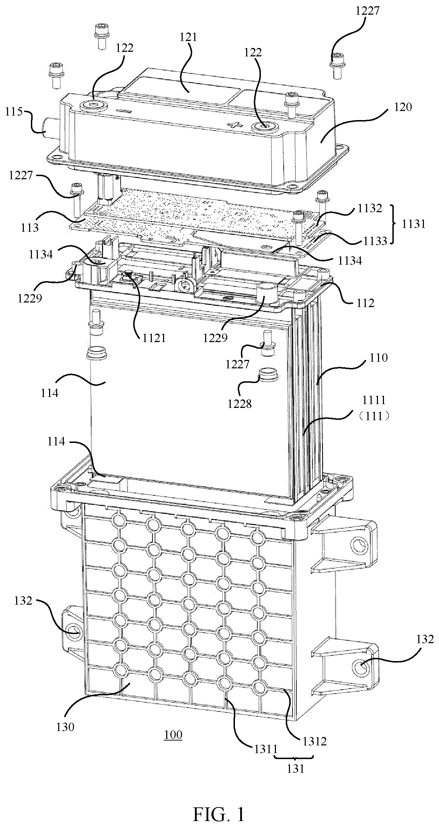

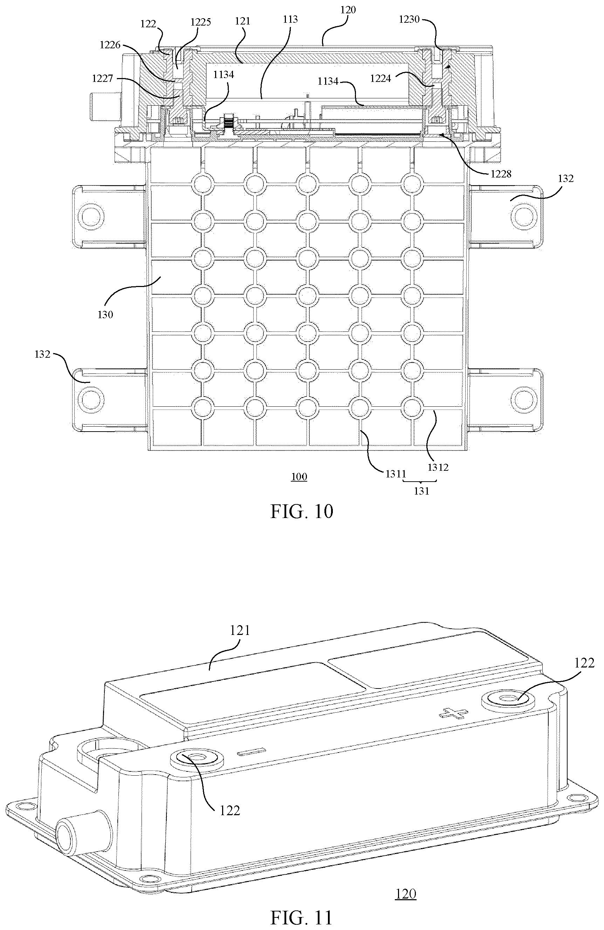

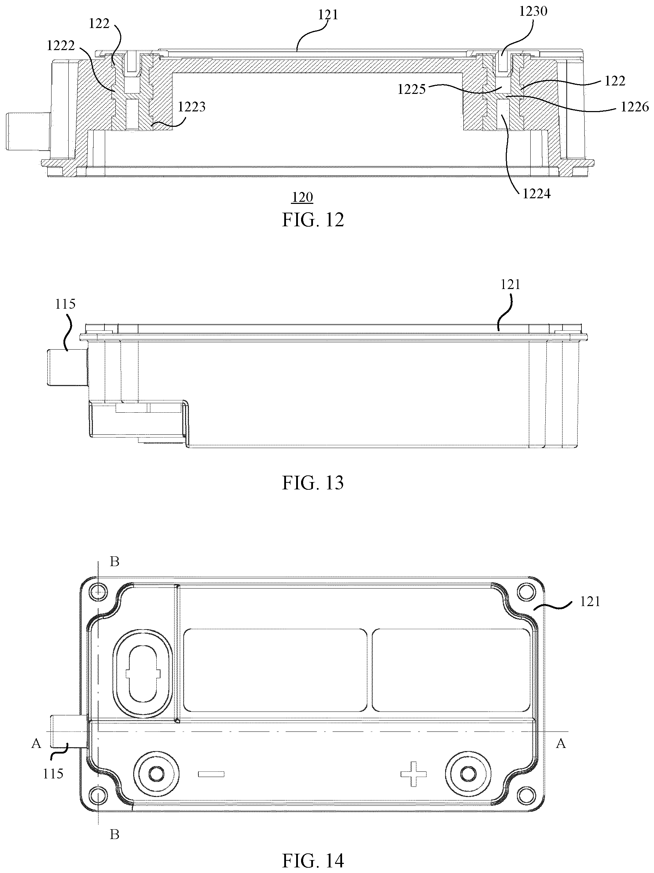

FIG. 1 is a structural exploded view of an energy storage battery pack according to an embodiment of the present application; FIG. 10 is an assembly sectional view of an energy storage battery pack according to an embodiment of the present application; FIG. 11 is a schematic structural diagram of an upper housing unit in an energy storage battery pack according to an embodiment of the present application; and FIG. 12 is a structural sectional view of an upper housing unit in an energy storage battery pack according to an embodiment of the present application.

With reference to FIG. 1, FIG. 10, FIG. 11, and FIG. 12, the energy storage battery pack 100 in the present application includes a battery module 110, a battery management unit 113, an upper housing unit 120, and a lower housing 130. The upper housing unit 120 and the lower housing 130 are disposed opposite to each other, the upper housing unit 120 has an opening, the lower housing 130 also has an opening, and the opening of the upper housing unit 120 and the opening of the lower housing 130 are disposed opposite to each other. A sealed environment is formed by the upper housing unit 120 and the lower housing 130 together when the upper housing unit 120 and the lower housing 130 are fixedly connected, the lower housing 130 has an accommodation cavity, and the battery module 110 and the battery management unit 113 are connected and arranged in the accommodation cavity. A manner in which the upper housing unit 120 and the lower housing 130 are fixedly connected, specifically, for example, may be bolted connection, adhesive bonding, or the like.

In addition, the upper housing unit 120 includes an upper housing body 121 and a terminal 122, the terminal 122 is embedded in the upper housing body 121, and is integrally formed with the upper housing body 121.

It may be understood that the terminal 122 is embedded in the upper housing body 121, a first end of the terminal 122 extends into the accommodation cavity and is connected to the battery management unit 113, and a second end of the terminal 122 extends to a top of the upper housing body 121 and is configured to be connected to an external device. It should be noted that the energy storage battery pack 100 requires polarity differentiation between a positive electrode and a negative electrode, correspondingly, the energy storage battery pack 100 includes a positive output and a negative output, and in addition, the second end of the terminal 122 is configured to be connected to the external device. Therefore, in this embodiment, two terminals 122 are provided, which are respectively connected to the positive electrode and the negative electrode after the battery module 110 is connected to the battery management unit 113. Through the above structural arrangement, a connection process between the terminal 122 and the upper housing body 121 is simplified, forming efficiency of the upper housing unit 120 is improved through a one-shot molding process, and then the production and assembly efficiency of the energy storage battery pack 100 is improved.

As a possible implementation, the terminal 122 is a rotary member, and a circumferential outer sidewall of the terminal 122 is connected to the upper housing body 121. The terminal 122 includes a terminal body 1221 and at least two bosses 1222, the at least two bosses 1222 are distributed at intervals along an axial direction of the terminal 122, and the boss 1222 extends outwards along a radial direction of the terminal 122. A length of the boss 1222 extending away from the terminal 122 along the radial direction of the terminal 122 is 1 to 2 mm.

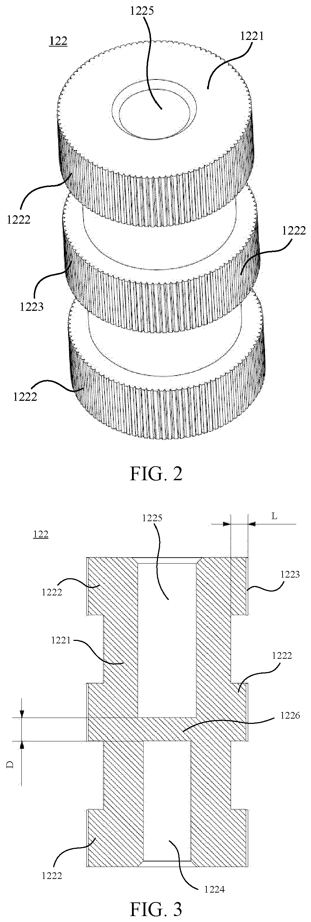

FIG. 2 is a schematic structural diagram of a terminal in an energy storage battery pack according to an embodiment of the present application, and FIG. 3 is a structural sectional view of a terminal in an energy storage battery pack according to an embodiment of the present application.

Specifically, as shown in FIG. 2 and FIG. 3, the terminal 122 in this embodiment is a rotary member, and the terminal 122 includes a terminal body 1221 and three bosses 1222. The three bosses 1222 are sequentially distributed at intervals along an axial direction of the terminal 122, each boss 1222 extends outwards along a radial direction of the terminal 122, and a length of the boss 1222 extending away from the terminal 122 along the radial direction of the terminal 122 is 1 to 2 mm (as labeled L in FIG. 3). In addition, an axial outer sidewall of the terminal 122 is connected to the upper housing body 121. A contact area between the terminal 122 and the upper housing body 121 is increased through disposing the boss 1222, thereby improving a strength of connection between the terminal 122 and the upper housing body 121. In addition, a surface area of the terminal body 1221 within its own radial plane is increased through disposing the boss 1222, which may enhance the current-carrying capacity of the terminal 122, thereby improving the performance of the energy storage battery pack 100.

Optionally, a plurality of anti-rotation ribs 1223 are uniformly distributed on a circumferential outer sidewall of the boss 1222 along a circumferential direction of the terminal 122.

Referring to FIG. 2 and FIG. 3, in order to improve a strength of a structure formed by integrally molding the terminal 122 and the upper housing body 121, the plurality of anti-rotation ribs 1223 are uniformly distributed on the circumferential outer sidewall of the boss 1222 along the circumferential direction of the terminal 122, and the anti-rotation ribs 1223 extend along the axial direction of the terminal 122 and are recessed along the radial direction of the terminal 122. The contact area between the terminal 122 and the upper housing body 121 is increased through disposing the anti-rotating ribs 1223, and meanwhile, a torsion and a pull-out force between the terminal 122 and the upper housing body 121 can be effectively improved. Specifically, the torsion can reach a level of 10.8, and at the same time, the pull-out force can reach 2000 N•m.

Possibly, the terminal 122 includes a first connection hole 1224 and a second connection hole 1225 which are coaxially arranged, and the first connection hole 1224 and the second connection hole 1225 are oppositely arranged. An opening of the first connection hole 1224 faces the first end of the terminal 122, an opening of the second connection hole 1225 faces the second end of the terminal 122, the first connection hole 1224 is connected to the battery management unit 113, and the second connection hole 1225 is connected to the external device. A partition layer 1226 is formed between a bottom of the first connection hole 1224 and a bottom of the second connection hole 1225, and a thickness of the partition layer 1226 in an axial direction of the terminal 122 is greater than or equal to 1 mm.

FIG. 10 is an assembly sectional view of an energy storage battery pack according to an embodiment of the present application.

Referring to FIG. 1 to FIG. 3 and FIG. 10, the terminal 122 includes a first connection hole 1224 and a second connection hole 1225. The first connection hole 1224 and the second connection hole 1225 are coaxially arranged, an opening of the first connection hole 1224 faces the first end of the terminal 122, an opening of the second connection hole 1225 faces the second end of the terminal 122, that is, the first connection hole 1224 is electrically connected to the battery management unit 113, and the second connection hole 1225 is configured to be connected to the external device. Because the terminal 122 is in communication with the interior and exterior of the energy storage battery pack 100, in order to improve a sealing performance and safety of the energy storage battery pack, a partition layer 1226 is formed between a bottom of the first connection hole 1224 and a bottom of the second connection hole 1225, and the partition layer 1226 can effectively block impurities such as moisture vapor and dust outside the energy storage battery pack 100 from entering the inside of the energy storage battery pack 100 through the terminal 122, thereby improving the sealing performance of the energy storage battery pack 100. A thickness of the partition layer 1226 in the axial direction of the terminal 122 is greater than or equal to 1 mm (see D labeled in FIG. 3). It should be noted that the thickness of the partition layer 1226 is greater than or equal to 1 mm, with no specific upper limit set, this thickness may be determined according to an actual situation, and the partition layer 1226 only needs to ensure that a minimum thickness is 1 mm and ensure the sealing performance of the terminal 122. The partition layer 1226 isolates the connection between the internal and external of the terminal 122 through a physical method, so that a protection level in the terminal 122 can reach the IP67.

As an optional implementation, the first connection hole 1224 and the second connection hole 1225 are threaded holes, the first connection hole 1224 is in threaded connection with the battery management unit 113, and the second connection hole 1225 is configured to be in threaded connection with the external device.

As shown in FIG. 10, the interior of the first connection hole 1224 is provided with threads, that is, the first connection hole 1224 is a threaded hole, and correspondingly, the first connection hole 1224 is in threaded connection with the battery management unit 113. Specifically, the first connection hole 1224 is connected to the battery management unit 113 by a bolt 1227. In order to ensure a sealing performance at the first connection hole 1224, a rubber plug 1228 may be further provided, and the rubber plug 1228 is hermetically connected to the bolt 1227. It is not difficult to understand, the second connection hole 1225 may also be provided as a threaded hole, and the second connection hole 1225 and the external device are connected by threads.

Possibly, the battery module 110 includes a battery cell 111 and a support member 112. The battery cell 111 includes a plurality of battery cell units 1111, and the plurality of battery cell units 1111 are sequentially stacked and electrically connected along a width extending direction of the lower housing 130 to form a positive tab and a negative tab of the battery cell 111.

The support member 112 covers the battery cell 111, the support member 112 includes a tab connection portion 1121, and the positive tab and the negative tab are respectively welded to the tab connection portion 1121 to form a positive tab connection portion and a negative tab connection portion. The negative tab connection portion and the positive tab connection portion are respectively bolted to the first connection holes 1224 of different terminals 122.

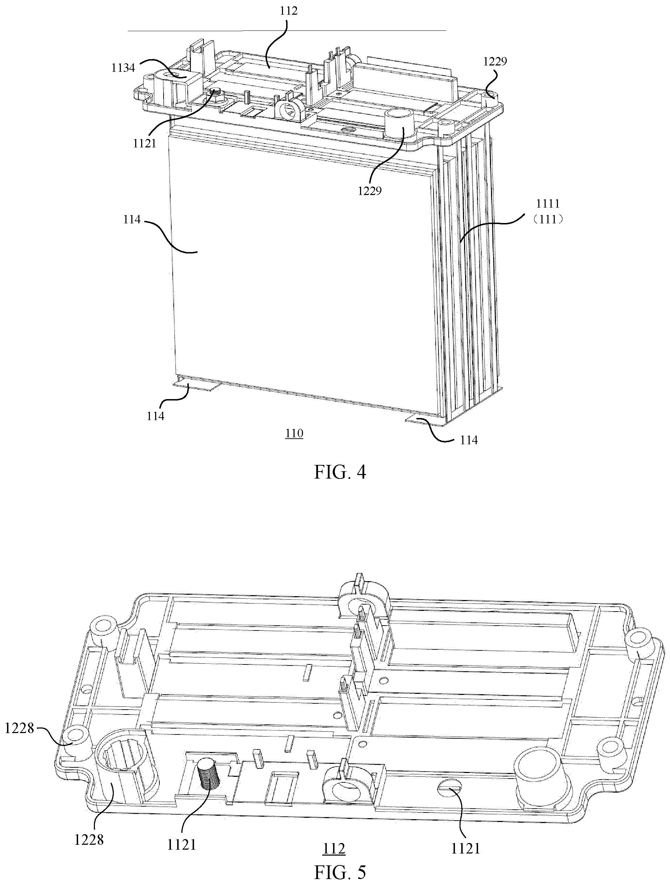

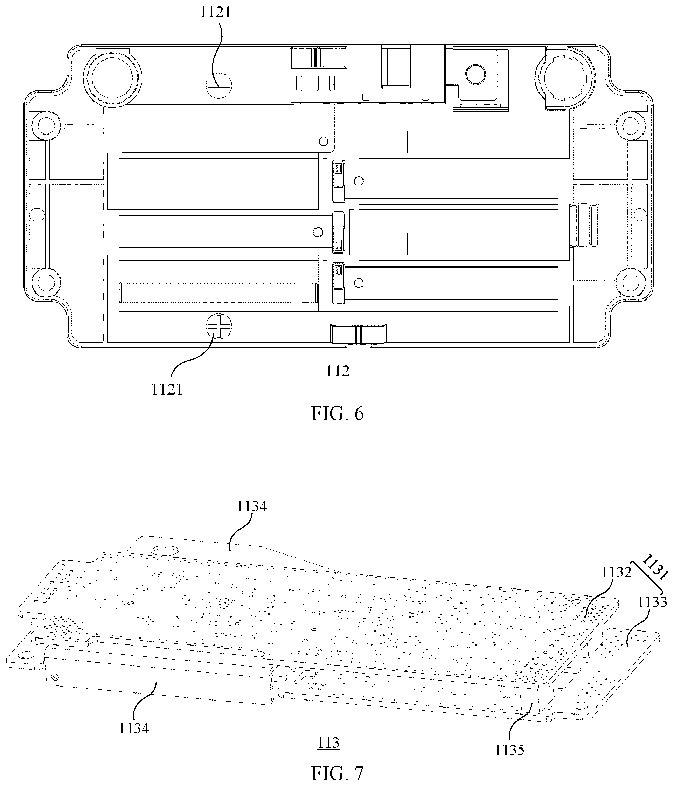

FIG. 1 is a structural exploded view of an energy storage battery pack according to an embodiment of the present application; FIG. 4 is a schematic structural diagram of a battery module in an energy storage battery pack according to an embodiment of the present application; FIG. 5 is a schematic structural diagram of a support member in an energy storage battery pack according to an embodiment of the present application; and FIG. 6 is a bottom view of a support member in an energy storage battery pack according to an embodiment of the present application.

Referring to FIG. 1 and FIG. 4 to FIG. 6, the battery module 110 includes a battery cell 111 and a support member 112. The battery cell 111 includes a plurality of battery cell units 1111, the battery cell units 1111 are sequentially stacked along a width extending direction of the lower housing 130, adjacent battery cell units 1111 are electrically connected through a tab, and a positive tab and a negative tab of the battery cell 111 are sequentially formed. The positive tab and the negative tab of the battery cell 111 are electrically connected to the support member 112. The support member 112 has a tab connection portion 1121, it is not difficult to understand that the positive tab of the battery cell 111 is connected to the positive tab connection portion 1121 of the support member 112, the negative tab of the battery cell 111 is connected to the negative tab connection portion 1121 of the support member 112, and the support member 112 covers the battery cell 111. After the tab connection portion of the support member 112 is connected to the tab of the battery cell 111, the tab connection portion 1121 on the support member 112 is in threaded connection with the terminal 122 through the first connection hole 1224, and in this case, an internal circuit of the battery cell 111 is in communication with the terminal 122 through the support member 112.

Optionally, the battery management unit 113 includes at least one circuit board 1131, the circuit board 1131 is connected to the support member 112 along a height extending direction of the lower housing 130, and the circuit board 1131 is electrically connected to the support member 112 and the terminal 122, respectively.

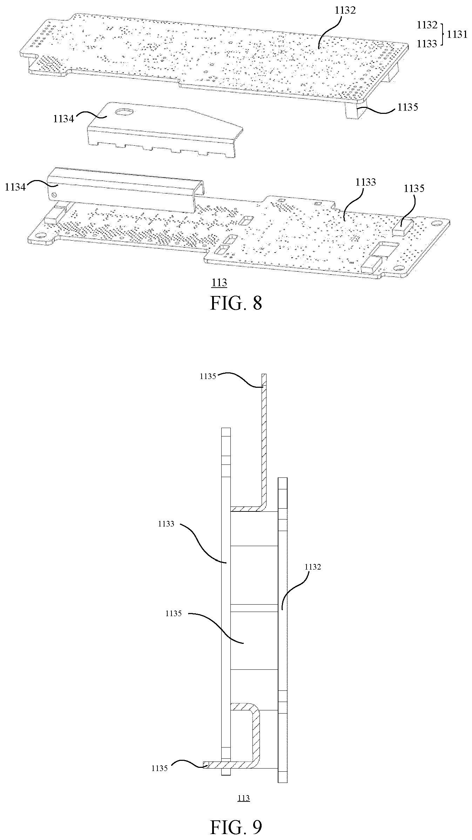

FIG. 7 is a schematic structural diagram of a battery management unit in an energy storage battery pack according to an embodiment of the present application; FIG. 8 is a structural exploded view of a battery management unit in an energy storage battery pack according to an embodiment of the present application; and FIG. 9 is a left view of a battery management unit in an energy storage battery pack according to an embodiment of the present application.

Referring to FIG. 1 and FIG. 7 to FIG. 10, specifically, the battery management unit 113 includes a circuit board 1131, the circuit board 1131 is configured to connect the support member 112 and the terminal 122, and in the energy storage battery pack 100, the circuit board 1131 and the support member 112 are electrically connected along a height extending direction of the lower housing 130. The battery management unit 113 includes a voltage management module, a current management module, a temperature management module, or the like. Required functions are printed on the circuit board 1131 in the form of circuits, through electrical connections between the circuit board 1131, the support member 112 and the terminal 122, a connection of the internal circuits of the circuit board 1131 is realized, and a detection management on the battery cell 111 may be further performed to reflect a working state and performance parameters of the energy storage battery pack 100 in real time.

Optionally, the circuit board 1131 includes a first circuit board 1132 and a second circuit board 1133, the first circuit board 1132 is electrically connected to the second circuit board 1133, and the first circuit board 1132 is electrically connected to the positive tab connection portion 1121 and the first connection hole 1224, respectively.

When an assembly space is limited, in order to ensure the safety of the circuit board 1131 and prevent the circuit board 1131 from being damaged due to excessive current, a plurality of circuit boards may be connected to meet a management effect of the battery management unit 113 to the battery cell 111. Specifically, there are two circuit boards 1131 in this embodiment, which includes the first circuit board 1132 and the second circuit board 1133, and the first circuit board 1132 and the second circuit board 1133 are electrically connected by insertion and matching of pin headers 1135. In addition, the first circuit board 1132 is connected to the positive tab connection portion 1121 on the support member 112 through a copper busbar 1134, and two ends of the copper busbar 1134 are respectively welded to the positive tab connection portion 1121 and the first circuit board 1132.

It may be understood that a first end of the copper busbar 1134 is welded to the second circuit board 1133, and a second end of the copper busbar 1134 is electrically connected to the terminal 122 through a bolted connection with a bolt 1227. In this case, the negative tab connection portion 1121 on the support member 112 is also electrically connected to the terminal 122 through the copper busbar 1134 and a bolted connection. Correspondingly, the internal circuit of the battery cell 111 is connected through the above structure. It is not difficult to understand that, the tab connection portion 1121 and the terminal 122 may be connected through a bolt connection hole 1229 on the support member 112 during a connection process, and the second circuit board 1133 and the support member 112 may also be fixedly connected through the cooperation of a bolt connection hole 1229 and the bolt 1227.

As an optional implementation, the battery module 110 further includes a foam 114. The foam 114 is connected to two opposite sides of the battery cell unit 1111; and/or, the foam 114 is connected to a bottom of the battery cell unit 1111.

Referring to FIG. 1 and FIG. 4, the battery module 110 in this embodiment further includes a foam 114, the foam 114 is connected to a surface of a battery cell unit 1111 on the outer side of the battery cell 111. The battery cell 111 is a storage battery, the storage battery may have a slight deformation during charging and discharging. By attaching foam to surfaces of the battery cell units 1111 respectively on two opposite sides of the battery cell 111, the deformation may be absorbed, thereby the stability of a position of the battery module 110 in the accommodation cavity is maintained. In addition, the foam 114 is also connected to a bottom of the battery cell 111, and the foam at the bottom of the battery cell 111 may form an interval between the bottom of the battery cell 111 and the lower housing 130, thereby protecting the battery cell 111 and preventing the battery cell 111 from being corroded due to contact with the lower housing 130.

Optionally, a reinforcement portion 131 is disposed on an outer wall of at least one of two side surfaces, distributed along the width extending direction of the lower housing 130, of the lower housing 130, the reinforcement portion 131 includes a plurality of first reinforcement ribs 1311 and a plurality of second reinforcement ribs 1312, and a first reinforcement rib 1311 of the plurality of the first reinforcement ribs 1311 are perpendicular to a second reinforcement rib 1312 of the plurality of the second reinforcement ribs 1312.

In order to increase an overall strength of the lower housing 130, a sidewall of the lower housing 130 is provided with a reinforcement portion 131, and the reinforcement portion 131 includes a plurality of first reinforcement ribs 1311 and a plurality of second reinforcement ribs 1312. The plurality of first reinforcement ribs 1311 are sequentially distributed at intervals along a length extending direction of the lower housing 130, and each first reinforcement rib 1311 extends along a height direction of the lower housing 130. In addition, the plurality of second reinforcement ribs 1312 are sequentially distributed at intervals along a height extending direction of the lower housing 130, and each second reinforcement rib 1312 extends along a length direction of the lower housing 130. The first reinforcement rib 1311 is perpendicular to the second reinforcement rib 1312. It is not difficult to understand that the number of the first reinforcement ribs 1311 and the number of the second reinforcement ribs 1312 need to be designed and adjusted according to an actual application condition of the energy storage battery pack 100, and the number of the first reinforcement ribs 1311 and the number of the second reinforcement ribs 1312 are not specifically limited in this embodiment.

Optionally, a plurality of bolt connection portions 132 are disposed on outer walls of two side surfaces, distributed along a length direction of the lower housing 130, of the lower housing 130, and a bolt connection portion 132 of the plurality of bolt connection portions 132 is configured to be fixedly connected to an external component.

After the upper housing unit 120 and the lower housing 130 are bolted together to encapsulate the battery module 110, there may be a situation in actual use where it is necessary to fix and connect to an external component. To accommodate this need, an outer sidewall, distributed along the length direction of the lower housing 130, of the lower housing 130 is provided with the plurality of bolt connection portions 132, and the bolt connection portions 132 may be fixedly connected to other external components by bolts. It should be noted that the number of the bolt connection portions 132 may be adjusted according to actual conditions, which is not specifically limited in this embodiment.

Specifically, the terminal 122 is a conductive body, and the upper housing body 121 is an injection molded member and is injection molded with the terminal 122. The upper housing body 121 is formed by injection molding, and the terminal 122 and the upper housing body 121 can be injection molded simultaneously during a molding process, thereby achieving a fixed connection between the terminal 122 and the upper housing body 121. A connection process between the terminal 122 and the upper housing body 121 is simplified by a one-shot molding process, and the processing efficiency of the upper housing unit 120 is improved.

Optionally, the terminal 122 further includes an insulating sleeve 1230, and the insulating sleeve 1230 is sleeved on the second connection hole 1225. After the upper housing unit 120 is fixedly connected to the lower housing 130, in order to prevent a leakage of the energy storage battery pack 100 due to a fact that the terminal 122 is contaminated by external moisture vapor in a transferring process, the insulating sleeve 1230 is sleeved on the second connection hole 1225 where the terminal 122 is connected to an external device, so that transportation safety and a service life of the energy storage battery pack 100 may be effectively prolonged. In addition, the insulating sleeve 1230 may further effectively reduce air impurities such as dust entering the terminal 122 and the energy storage battery pack 100.

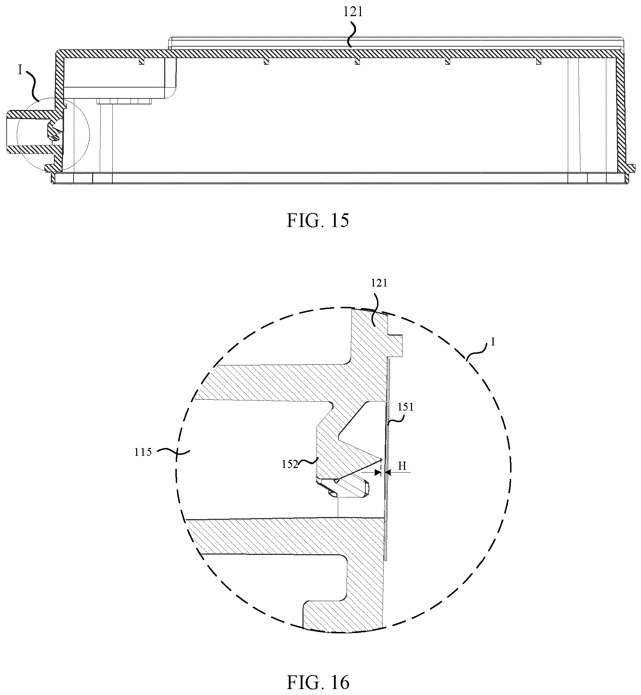

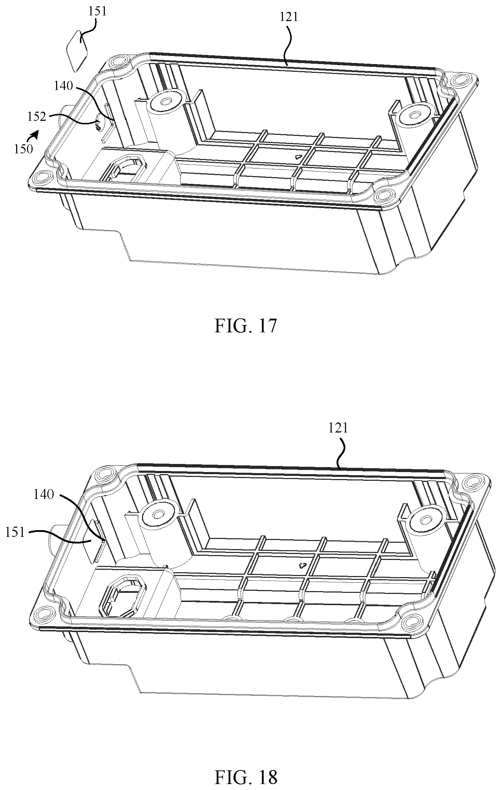

FIG. 13 is a schematic structural diagram of an upper housing body, from a first perspective, in an energy storage battery pack according to an embodiment of the present application; FIG. 14 is a schematic structural diagram of an upper housing body, from a second perspective, in an energy storage battery pack according to an embodiment of the present application; FIG. 15 is a schematic diagram of a sectional structure along the line A-A in FIG. 14 according to an embodiment of the present application; FIG. 16 is an enlarged schematic diagram of area I in FIG. 15; FIG. 17 is an exploded view of a breathable membrane and an upper housing body in an energy storage battery pack according to an embodiment of the present application; and FIG. 18 is an assembly diagram of a breathable membrane and an upper housing body in an energy storage battery pack according to an embodiment of the present application.

As shown in FIG. 1 to FIG. 18, the embodiments of the present application provide a energy storage battery pack 100, which includes an explosion-proof assembly 150, and the upper housing body 110 is provided with a through hole 115 in communication with the accommodation cavity.

It may be understood that the accommodation cavity is used for accommodating the battery module 110. It is not difficult to understand that the accommodation cavity is in a sealed state, so as to prevent side reactions in an internal system of the battery cell 111 in the battery module 110, thereby preserving the performance of the battery cell 111.

A size of the upper housing body 110 may be set according to actual requirements, which is not unduly limited herein.

In some examples, the upper housing body 110 may be a metal member, and a material of the upper housing body 110 may include one or more of copper, iron, aluminum, tin, and lead. A material of a casting mold may be one of sand, metal, or ceramic.

In some other examples, a material of the upper housing body 110 may be plastic. During an injection molding process, molten plastic is injected into a plastic product mold under pressure, and a required plastic member is obtained after cooling and solidification.

The injection molding process may be completed by a mechanical injection molding machine, and the material of the upper housing body 110 may include one or more of polyethylene, polypropylene, ABS (a ternary copolymer of acrylonitrile (A), butadiene (B), styrene (S)), polyamide, and polystyrene.

It should be noted that, a specific material of the upper housing body 110 is not unduly limited in the embodiments of the present application.

Of course, during production and manufacturing, on a premise of ensuring strength, the upper housing body 110 may also be made of a steel plate, a plastic, or a composite material.

In addition, it should be noted that a shape of the upper housing body 110 is not limited in this embodiment, for example, the upper housing body 110 may have a regular shape such as a cuboid shape and a cylindrical shape, and certainly, the upper housing body 110 may also have other irregular shapes.

For example, a size or shape of the accommodation cavity matches a size or shape of the battery module 110, and specifically, a corresponding adjustment may be made according to an actual situation, which is not unduly limited in the embodiments of the present application.

As shown in FIG. 1 to FIG. 18, the explosion-proof assembly 150 includes a breathable membrane 151 and a piercing member 152. The breathable membrane 151 is attached to an inner wall surface of the upper housing body 110 and covers the through hole 115. The piercing member 152 and the upper housing body 110 are integrally formed, the piercing member 152 is located in the through hole 115, a gap is provided between the piercing member 152 and an end surface of the through hole 115, and the piercing member 152 is configured to pierce the breathable membrane 151 when the breathable membrane 151 deforms and expands beyond the end surface of the through hole 115.

It should be noted that the breathable membrane 151 completely covers the through hole 115. Through the through hole 115, and the interior of the upper housing body 110 may be communicated with the outside, so that a gas in the upper housing body 110 can be discharged outward.

In some examples, the piercing member 152 and the upper housing body 110 are integrally formed, which may ensure that the piercing member 152 and the upper housing body 110 are manufactured as a single inseparable structure. Therefore, on one hand, the number of components used may be reduced, assembly difficulty and assembly accuracy requirements may be reduced, a process of connecting the piercing member 152 to the upper housing body 110 by welding is eliminated, and the assembly efficiency is improved.

On the other hand, a possibility of loosening between the piercing member 152 and the upper housing body 110 is reduced, and a structural strength is relatively high.

In some examples, the breathable membrane 151 may be made of a polytetrafluoroethylene (EPTFE) film in specific applications.

In addition, in some other examples, the breathable membrane 151 is prepared from one or a mixture of more than one of poly(fluorinated dioxole), fluoro-poly(alkenyl vinyl ether), fluorinated polyimide, copolymer of fluorinated dioxole and tetrafluoroethylene, polyimide, polysulfone, and cellulose acetate.

In some examples, a thickness of the breathable membrane 151 may be between 0.05 mm and 0.5 mm, so that an arrangement of the breathable membrane 151 may not adversely affect a structure of the upper housing body 110.

In some examples, the piercing member 152 and an inner wall of the through hole 115 may be fixedly connected.

In addition, it should be noted that a size of the gap between the piercing member 152 and an end surface of the through hole 115 may be adjusted according to actual situations, which is not unduly limited in the embodiments of the present application.

It may be understood that an outer side of the battery module 110 is wrapped with a layer of casing, and specifically, a general packaging process needs to ensure a sealing performance and security of a finished battery cell 111. An adhesive layer between aluminum laminate films is fused and sealed through top sealing, side sealing and bottom sealing.

The casing isolates moisture and oxygen in an external environment, ensures the sealing performance of the battery module 110, and prevents side reactions from occurring within the internal system of the battery module 110, which may further affect the performance of the battery module 110.

For example, the casing may be an aluminum laminate film casing.

It should be noted that, when an internal pressure of the energy storage battery pack 100 is too large, the internal heat diffusion of the battery module 110 reaches a certain pressure, and at this time, the breathable membrane 151 is subjected to pressure, so that the breathable membrane 151 deforms under a certain pressure. A deformed breathable membrane 151 gradually approaches the piercing member 152, when the breathable membrane 151 is subjected to a higher pressure or a threshold pressure, the breathable membrane 151 expands beyond an end surface of the through hole 115, and at this moment, the piercing member 152 pierces the breathable membrane 151 for pressure relief.

In addition, it should be noted that a range of the threshold pressure may range from 30 kPa to 50 kPa, and in particular, which is not unduly limited in the embodiments of the present application.

Through a design of the breathable membrane 151 and the piercing member 152, when the internal pressure of the energy storage battery pack 100 is too large, the breathable membrane 151 is subjected to pressure, so that the breathable membrane 151 deforms under a certain pressure. The deformed breathable membrane 151 gradually approaches the piercing member 152, and when the breathable membrane 151 expands beyond the end surface of the through hole 115, the piercing member 152 pierces the breathable membrane 151 for pressure relief. An original explosion-proof valve structure is replaced by According to the energy storage battery pack 100 provided in the present application, the breathable membrane 151 and the piercing member 152 replace an original explosion-proof valve structure, which reduces an explosion-proof cost and provides better pressure relief.

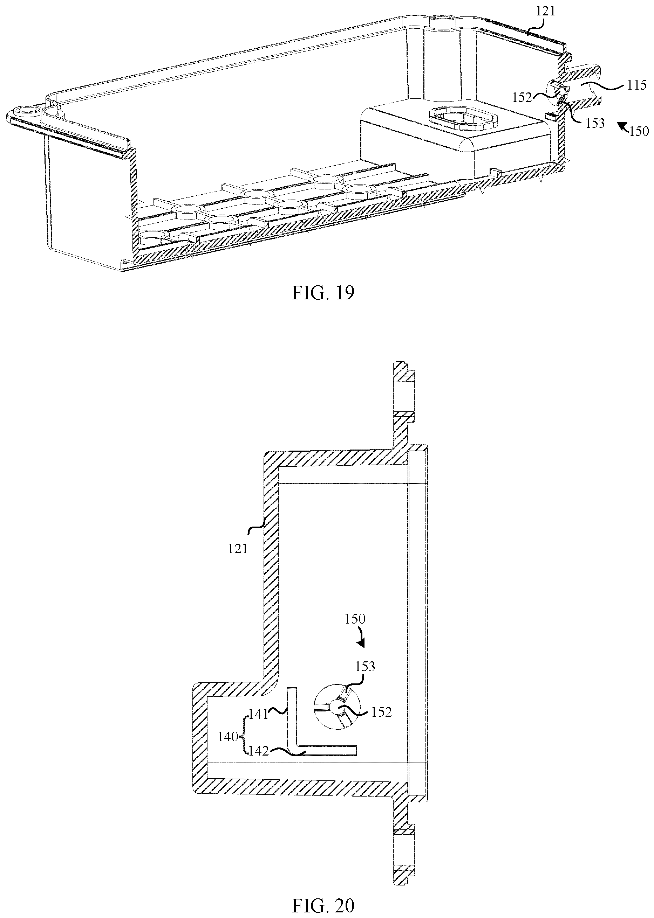

FIG. 19 is a schematic structural diagram of a part of an upper housing body in an energy storage battery pack according to an embodiment of the present application, as shown in FIG. 1 to FIG. 19, as a possible implementation, the through hole 115 penetrates through a sidewall of the upper housing body 110.

It may be understood that a design of the through hole 115 enables small molecule to be discharged outside the energy storage battery pack 100, thereby avoiding an expansion of the energy storage battery pack 100 and prolonging a service life of the energy storage battery pack 100.

It should be noted that a shape of the through hole 115 in this embodiment may be circular, but besides the circular, the shape of the through hole 115 may be square, diamond, triangular, elliptical, or the like, and specifically, which is not unduly limited in the embodiments of the present application.

As shown in FIG. 1 to FIG. 19, as a possible implementation, the piercing member 152 includes a cone, and a tip of the cone faces the breathable membrane 151.

It may be understood that, such a design facilitates the piercing member 152 to pierce the breathable membrane 151 faster for pressure relief.

In some examples, the piercing member 152 may be a metal member, and a material thereof may include one or more of copper, iron, aluminum, tin, and lead.

In some other examples, a material of the piercing member 152 may be plastic. During an injection molding process, molten plastic is injected into a plastic product mold under pressure, and a required plastic member is obtained after cooling and solidification.

It should be noted that, a specific material of the piercing member 152 is not unduly limited in the embodiments of the present application.

Of course, during production and manufacturing, on a premise of ensuring strength, the piercing member 152 may also be made of a steel plate, a plastic, or a composite material.

As shown in FIG. 1 to FIG. 19, as a possible implementation, a gap distance between the tip of the cone and the end surface of the through hole 115 is between 0.3 mm and 0.4 mm.

It may be understood that an appropriate gap distance is convenient to provide a space for a deformation of the breathable membrane 151, thereby improving a pressure relief effect.

It should be noted that, as shown in FIG. 16, H represents the gap distance between the tip of the cone and the end surface of the through hole 115. H may be 0.3 mm, 0.31 mm, 0.32 mm, 0.33 mm, 0.34 mm, 0.35 mm, 0.36 mm, 0.37 mm, 0.38 mm, 0.39 mm or 0.4 mm, or any value, and specifically, which is not unduly limited in the embodiments of the present application.

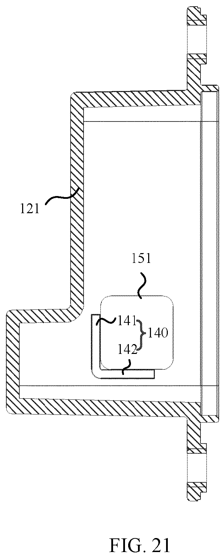

FIG. 20 is a schematic diagram of a sectional structure along the line B-B in FIG. 14 according to an embodiment of the present application, and FIG. 21 is a schematic diagram of a sectional structure after a breathable membrane is installed along the line B-B in FIG. 14 according to an embodiment of the present application.

As shown in FIG. 1 to FIG. 21, as a possible implementation, the explosion-proof assembly 150 further includes a supporting spoke 153, the supporting spoke 153 is located in the through hole 115, a first end of the supporting spoke 153 is connected to an inner wall surface of the through hole 115, and a second end of the supporting spoke 153 is connected to the piercing member 152.

It may be understood that the supporting spoke 153 is designed to support the piercing member 152 to improve an overall strength.

In some examples, the supporting spoke 153 may be disposed on an inner wall surface of the through hole 115 by welding, a bolt, or other connection manners.

Optionally, the supporting spoke 153 and the inner wall surface of the through hole 115 may be connected in a welding manner, so that a mechanical performance of the explosion-proof assembly 150 is enhanced.

The supporting spoke 153 is disposed on a connecting side of the piercing member 152 to strengthen a mechanical strength of the piercing member 152, thereby ensuring the stability of a whole explosion-proof assembly 150.

In some examples, a fixed or detachable connection manner may be adopted between the first end of the supporting spoke 153 and the inner wall of the through hole 115.

For example, a bolted connection, a snap-fit connection, or a hanging connection is used between the first end of the supporting spoke 153 and the inner wall of the through hole 115, and specifically, which is not unduly limited in the embodiments of the present application.

Of course, in some examples, a fixed or detachable connection may be adopted between the second end of the supporting spoke 153 and an end of the piercing member 152.

Additionally, for a material design with respect to the supporting spoke 153, in some examples, the material of the supporting spoke 153 may be the same as a material of the piercing member 152, and certainly may also be different from the material of the piercing member 152, specifically, which is not unduly limited in the embodiments of the present application.

For example, the supporting spoke 153 may be a metal member, and a material of the supporting spoke 153 may include one or more of copper, iron, aluminum, tin, and lead.

In some other examples, a material of the supporting spoke 153 may be plastic. During an injection molding process, molten plastic is injected into a plastic product mold under pressure, and a required plastic member is obtained after cooling and solidification.

It should be noted that, a specific material of the supporting the spokes 153 is not unduly limited in the embodiments of the present application.

Of course, during production and manufacturing, on a premise of ensuring strength, the supporting spokes 153 may also be made of a steel plate, a plastic, or a composite material.

As shown in FIG. 1 to FIG. 21, in a possible implementation, there are a plurality of supporting spokes 153, and the plurality of supporting spokes 153 are distributed at different positions in a circumferential direction of the through hole 115.

It may be understood that the plurality of supporting spokes 153 are designed to better support the piercing member 152 and improve an overall strength.

It should be noted that the number of the supporting spoke 153 may be two, three, or more than three, and the specific number of the supporting spoke 153 in the embodiments of the present application may be adjusted according to actual situations, which is not unduly limited herein.

For example, as shown in FIG. 20, there are three supporting spokes 153, and the three supporting spokes 153 are distributed at different positions in the circumferential direction of the through hole 115.

As a possible implementation, the supporting spoke 153 and the piercing member 152 are integrally formed.

It should be noted that the supporting spoke 153 and the piercing member 152 are integrally formed, so that not only can a connection strength between the supporting spoke 153 and the piercing member 152 be improved, but also a seamless connection between the supporting spoke 153 and the piercing member 152 can be realized, thereby reducing a risk of cracking at a connecting position between the supporting spoke 153 and the piercing member 152.

Specifically, the supporting spoke 153 and the piercing member 152 are integrally formed, which may ensure that the supporting spoke 153 and the piercing member 152 are manufactured as a single inseparable structure. Therefore, on one hand, the number of components used may be reduced, assembly difficulty and assembly accuracy requirements may be reduced, a process of connecting the supporting spoke 153 to the piercing member 152 by welding is eliminated, and the assembly efficiency is improved.

On the other hand, the overall rigidity of the explosion-proof assembly 150 may be improved, a possibility of loosening between the supporting spoke 153 and the piercing member 152 is reduced, and a structural strength is relatively high.

It should be noted that, in some embodiments, the supporting spoke 153 is connected to the piercing member 152 in an integral connection manner.

In some other embodiments, the supporting spoke 153 and the piercing member 152 may also be connected in other connection manners, and any connection manner that can achieve a fixed connection between the supporting spoke 153 and the piercing member 152 can fulfill a purpose of this embodiment. Therefore, the connection manner of the supporting spoke 153 and the piercing member 152 is not limited herein.

As shown in FIG. 1 to FIG. 21, as a possible implementation, an inner wall surface of the upper housing body 110 is further provided with a positioning portion 140, and the positioning portion 140 abuts against an edge of the breathable membrane 151 to position the breathable membrane 151.

It may be understood that a design of the positioning portion 140 facilitates positioning of the breathable membrane 151, improves an accuracy of an arrangement position of the breathable membrane 151, and increases interaction between the breathable membrane 151 and the piercing member 152.

It should be noted that a structure of the positioning portion 140 matches a structure of the breathable membrane 151 to facilitate positioning.

In some examples, the positioning portion 140 may be welded on the inner wall surface of the upper housing body 110, or the positioning portion 140 may be integrally formed with the inner wall surface of the upper housing body 110.

As shown in FIG. 1 to FIG. 21, as a possible implementation, the positioning portion 140 is provided with a first positioning flange 141 and a second positioning flange 142, and the first positioning flange 141 and the second positioning flange 142 abut against edges in different directions of the breathable membrane 151, respectively.

It may be understood that a design of the first positioning flange 141 and the second positioning flange 142 further improves the accuracy of positioning.

It should be noted that the first positioning flange 141 and the second positioning flange 142 are respectively oriented in different directions, and in some examples, the first positioning flange 141 and the second positioning flange 142 may be perpendicular to each other.

It means that when the breathable membrane 151 is in a rectangular shape, the first positioning flange 141 and the second positioning flange 142 may be perpendicular to each other to facilitate better positioning.

In addition, it should be noted that the breathable membrane 151 may be in other shapes, such as circular, elliptical, or other irregular shapes, and correspondingly, the positioning portion 140 is adjusted according to a shape of the breathable membrane 151, which is not unduly limited in the embodiments of the present application.

As shown in FIG. 1 to FIG. 21, as a possible implementation, the energy storage battery pack 100 further includes a circuit board 1131, a tab of the battery cell 111 in the battery module 110 is electrically connected to the circuit board 1131, and the circuit board 1131 faces the upper housing body 121.

The upper housing body 121 and the lower housing 130 jointly enclose the accommodation cavity, and the through hole 115 and the breathable membrane 151 are both located on the upper housing body 121.

It may be understood that such a design improves compactness of an entire structure.

In some examples, the upper housing body 121 and the lower housing 130 are aluminum profiles manufactured by using a profile production process, the upper housing body 121 and the lower housing 130 are integrally formed, and a thickness may be reduced according to production requirements, so that a weight of a whole upper housing body 110 may be reduced, and material consumption of the upper housing body 110 during production is reduced, thereby reducing a production cost of the upper housing body 110.

It should be noted that the piercing member 152, the supporting spoke 153, and a sidewall of the through hole 115 in the upper housing body 121 are integrally formed, so as to improve the strength of the piercing member 152 and the supporting spoke 153, reduce a mounting process, and reduce a mounting cost.

The present application provides an energy storage battery pack, which includes a battery module, a battery management unit, an upper housing unit, and a lower housing. The upper housing unit includes an upper housing body and a terminal, the terminal is embedded in the upper housing body, and is integrally formed with the upper housing body. An opening of the upper housing body is opposite to an opening of the lower housing, the upper housing unit is fixedly connected to the lower housing, the lower housing is provided with an accommodation cavity, and the battery module and the battery management unit are connected and arranged in the accommodation cavity. A first end of the terminal extends into the accommodation cavity and is connected to the battery management unit, and a second end of the terminal is configured to be connected to an external device. Through such a structural design, a connection mode between the terminal and a housing is changed, a connection process is simplified, and thus the production and assembly efficiency of the energy storage battery pack is improved.

It should be readily understood that the terms "on", "above" and "over" as used in this disclosure should be interpreted in their broadest sense, so that "on" not only means "directly on something", but also encompasses the meaning of "on something" with an intermediate feature or layer therebetween, and "above" or "over" not only includes the meaning of "above something" or "over something", but can also include "above something" or "over something" and there is no intermediate feature or layer therebetween (that is, directly on an object).

In addition, for ease of description, spatially relative terms, for example, "below", "beneath", "lower", "above", "upper", and the like, may be used to describe a relationship of a component or feature to another component or feature as shown in a figure. Spatially relative terms are intended to encompass different orientations of a device in use or operation in addition to the orientation shown in the figures. An apparatus may have other orientations (rotated 90° or in other orientations), and the spatially relative descriptors used herein may likewise be interpreted accordingly.

It should be finally noted that the above embodiments are only used to illustrate the technical solutions of the present utility model and are not limited thereto. Although the present utility model is described in detail with reference to the foregoing embodiments, a person of ordinary skill in the art should understand that the technical solutions described in the foregoing embodiments may still be modified, or some or all of the technical features may be equivalently replaced; and these modifications or replacements do not make the essence of the corresponding technical solutions to depart from the scope of the technical solutions of the embodiments of the present utility model.

## Claims

1. An energy storage battery pack, comprising: a battery module, a battery management unit, an upper housing unit and a lower housing; wherein the upper housing unit comprises an upper housing body and a terminal, the terminal is embedded in the upper housing body, and is integrally formed with the upper housing body; an opening of the upper housing body is opposite to an opening of the lower housing, the upper housing unit is fixedly connected to the lower housing, the lower housing is provided with an accommodation cavity, and the battery module and the battery management unit are connected and arranged in the accommodation cavity; and
a first end of the terminal extends into the accommodation cavity and is connected to the battery management unit, and a second end of the terminal is configured to be connected to an external device.

2. The energy storage battery pack according to claim 1, wherein the terminal is a rotary member, a circumferential outer sidewall of the terminal is connected to the upper housing body, the terminal comprises a terminal body and at least two bosses, the at least two bosses are distributed at intervals along an axial direction of the terminal, and the boss extends outwards along a radial direction of the terminal; and
a length of the boss extending away from the terminal along the radial direction of the terminal is 1 to 2 mm.

3. The energy storage battery pack according to claim 2, wherein a plurality of anti-rotation ribs are uniformly distributed on a circumferential outer sidewall of the boss along a circumferential direction of the terminal.

4. The energy storage battery pack according to any one of claims 1 to 3, wherein the terminal comprises a first connection hole and a second connection hole which are coaxially arranged, the first connection hole and the second connection hole are oppositely arranged, an opening of the first connection hole faces the first end of the terminal, an opening of the second connection hole faces the second end of the terminal, the first connection hole is connected to the battery management unit, the second connection hole is connected to the external device, a partition layer is formed between a bottom of the first connection hole and a bottom of the second connection hole, and a thickness of the partition layer in an axial direction of the terminal is greater than or equal to 1 mm.

5. The energy storage battery pack according to claim 4, wherein the first connection hole and the second connection hole are threaded holes, the first connection hole is in threaded connection with the battery management unit, and the second connection hole is configured to be in threaded connection with the external device.

6. The energy storage battery pack according to claim 5, wherein the battery module comprises a battery cell and a support member, the battery cell comprises a plurality of battery cell units, and the plurality of battery cell units are sequentially stacked and electrically connected along a width extending direction of the lower housing to form a positive tab and a negative tab of the battery cell; and
the support member covers the battery cell, the support member comprises a tab connection portion, the positive tab and the negative tab are respectively welded to the tab connection portion to form a positive tab connection portion and a negative tab connection portion, and the negative tab connection portion and the positive tab connection portion are respectively in threaded connection with the first connection holes of different terminals.

7. The energy storage battery pack according to claim 6, wherein the battery management unit comprises at least one circuit board, the circuit board is connected to the support member along a height extending direction of the lower housing, and the circuit board is electrically connected to the support member and the terminal, respectively.

8. The energy storage battery pack according to claim 7, wherein the circuit board comprises a first circuit board and a second circuit board, the first circuit board is electrically connected to the second circuit board, and the first circuit board is electrically connected to the positive tab connection portion and the first connection hole, respectively.

9. The energy storage battery pack according to any one of claims 6 to 8, wherein the battery module further comprises a foam, wherein
the foam is connected to two opposite sides of the battery cell unit; and/or, the foam is connected to a bottom of the battery cell unit.

10. The energy storage battery pack according to claim 9, wherein a reinforcement portion is disposed on an outer wall of at least one of two side surfaces, distributed along the width extending direction of the lower housing, of the lower housing, the reinforcement portion comprises a plurality of first reinforcement ribs and a plurality of second reinforcement ribs, and a first reinforcement rib of the plurality of first reinforcement ribs is perpendicular to a second reinforcement rib of the plurality of second reinforcement ribs.

11. The energy storage battery pack according to claim 10, wherein a plurality of bolt connection portions are disposed on outer walls of two side surfaces, distributed along a length direction of the lower housing, of the lower housing, and a bolt connection portion of the plurality of bolt connection portions is configured to be fixedly connected to an external component.

12. The energy storage battery pack according to claim 10 or 11, wherein the terminal is a conductive body, and the upper housing body is an injection molded member and is injection molded with the terminal.

13. The energy storage battery pack according to claim 12, wherein the terminal further comprises an insulating sleeve, and the insulating sleeve is sleeved on the second connection hole.

14. The energy storage battery pack according to any one of claims 1 to 3, further comprising an explosion-proof assembly, wherein the upper housing body is provided with a through hole in communication with the accommodation cavity; and
the explosion-proof assembly comprises a breathable membrane and a piercing member, the breathable membrane is attached to an inner wall surface of the upper housing body and covers the through hole, the piercing member and the upper housing body are integrally formed, the piercing member is located in the through hole, a gap is provided between the piercing member and an end surface of the through hole, and the piercing member is configured to pierce the breathable membrane when the breathable membrane deforms and expands beyond the end surface of the through hole.

15. The energy storage battery pack according to claim 14, wherein the through hole penetrates through a sidewall of the upper housing body.

16. The energy storage battery pack according to claim 15, wherein the piercing member comprises a cone, and a tip of the cone faces the breathable membrane.

17. The energy storage battery pack according to claim 16, wherein a gap distance between the tip of the cone and the end surface of the through hole is between 0.3 mm and 0.4 mm.

18. The energy storage battery pack according to claim 14, wherein the explosion-proof assembly further comprises a supporting spoke, the supporting spoke is located in the through hole, a first end of the supporting spoke is connected to an inner wall surface of the through hole, and a second end of the supporting spoke is connected to the piercing member.

19. The energy storage battery pack according to claim 18, wherein there are a plurality of supporting spokes, and the plurality of supporting spokes are distributed at different positions in a circumferential direction of the through hole.

20. The energy storage battery pack according to claim 19, wherein the supporting spoke and the piercing member are integrally formed.

21. The energy storage battery pack according to claim 14, wherein a positioning portion is further provided on the inner wall surface of the upper housing body, and the positioning portion abuts against an edge of the breathable membrane to position the breathable membrane.

22. The energy storage battery pack according to claim 21, wherein the positioning portion is provided with a first positioning flange and a second positioning flange, and the first positioning flange and the second positioning flange abut against edges in different directions of the breathable membrane, respectively.

23. The energy storage battery pack according to claim 14, further comprising a circuit board, wherein a tab of a battery cell in the battery module is electrically connected to the circuit board, and the circuit board faces the upper housing body; and
the upper housing body and the lower housing jointly enclose the accommodation cavity, and the through hole and the breathable membrane are both located on the upper housing body.
